# EUROPEAN PATENT APPLICATION

(11) **EP 0 638 990 A1**
(43) Date of publication of application: **15.02.1995**
(21) Application number: 93306290.3
(22) Date of filing: 10.08.1993
(51) Int. Cl.: H02P 7/282

(54) **The voltage doubling driving offset method and circuit device of the dc series type excitation or compound rectifier motor**

(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(57) **Abstract**

The main feature of the present invention is to perform sub-exciter control on the series type excitation magnetic field winding of the DC series type excitation or compound dynamo (including generator and motor), especially to increase the magnetic field by means of the sub-exciter control on low voltage or light load operation, and it will be normal excitation on full load to cause the light load and full load to be saturated excitation or nearly saturated excitation under various voltage in order to improve the efficiency.

## Description

### SUMMARY OF THE INVENTION

The circuit of the present invention refers an innovative design of the voltage-doubling driving offset method and circuit device for the DC series type excitation or compound rectifier motor, the total efficiency of the conventional series type or compound armature always tended to be low under voltage-doubling operation especially the low voltage operation due to the dropping of the excitation current in the insufficiency of the magnetic field intensity, it is aimed at the above shortcoming that he following methods are introduced, the features of which are :
To perform sub-exciter control on the magnetic field of the DC series type excitation or compound dynamo (including generator and motor) especially increase the magnetic field intensity on low voltage or under-load operation without sufficient excitation and perform normal excitation on full load in order to attain saturated excitation or nearly saturated excitation under either full load or light load voltage to raise the efficiency in low voltage section, the main methods of which comprise:
(1) To perform sub-exciter control against the series type excitation winding by means of the auxiliary magnetic field power supply for the motor providing series type winding; the auxiliary magnetic field power supply would increase the current of the series type excitation magnetic field on the reducing of the excitation current of the series type excitation winding, otherwise reduce the current of the series type excitation magnetic field;
(2) The auxiliary magnetic field power supply would increase the excitation current of the series type excitation winding on the reducing of the current passing the series type excitation winding in compound motor, otherwise reduce the current of the series type excitation magnetic field;
   the above method is to get a constant or approximately permanent intensity magnetic field by means of reducing the sub-exciter while the excitation current of the series type excitation winding increased, otherwise increasing the sub-exciter to raise the efficiency of the low voltage section of the voltage doubling and light load;
   The difference between the present invention and conventional separately excited dynamo in normal operation district but preserving the features of low starting current, big torque and good overloading torsion of the series type excitation motor and avoid the shortcoming of the insufficiency of the excitation of the magnetic field resulting in the dropping of efficiency of the series type excitation motor on low voltage operation and non-full load, the above principle is applicable to both generator and motor.

### BRIEF DESCRIPTION OF THE DRAWINGS

FIG. 1 is a diagram showing the principle that the motor with series winding applies the auxiliary field power supply to the series winding as the auxiliary exciting circuit.

FIG. 2 is the preferred embodiment of the circuit showing in FIG. 1 to use further the auxiliary battery or other storage component as auxiliary power supply.

### DETAILED DESCRIPTION OF THE INVENTION

As the blaze of publicity, the series type excitation motor provides the features of good starting and overloading, especially the better feature of the current to the torsion and the relatively restricted starting current, but in the features of output, in the case of motor the torsion is in right proportion to the intensity of the magnetic field, the magnetic field is always required to maintain appropriate intensity on low speed; in the case of generator, the generating voltage is in right proportion to the intensity of the magnetic field on low voltage output, otherwise the efficiency will be low on low voltage driving of the motor and the low voltage output of the generator. Aiming at the above shortcoming, the present invention adopts an innovative design of the voltage-doubling driving offset method and circuit device of the DC series type excitation or compound rectifier motor, the main feature is to perform sub-exciter control on the series type excitation magnetic field winding of the DC series type excitation or compound dynamo (including generator and motor), especially to increase the magnetic field by means of the sub-exciter control on low voltage or light load operation, and it will be normal excitation on full load to cause the light load and full load to be saturated excitation or nearly saturated excitation under various voltage in order to improve the efficiency.

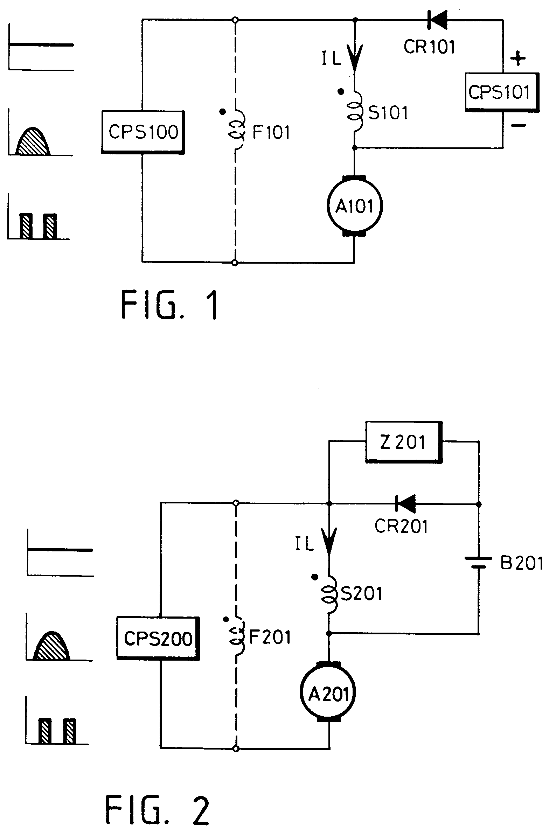

The principle and relative advantages are given as follows:
A series type excitation motor constituted by the series type excitation winding S101 and armature A101 to be connected in series, or it comprises further a compound DC motor to be constituted by parallel type excitation magnetic field winding F101;
The main power supply CPS100 is the DC power supply to drive the motor, consisted of which including the storage power element, generator, solar energy, or the fixed voltage or adjustable voltage DC power supply coming from the rectification of AC power supply;
The sub-exciter power supply CPS101 is connected in series to the blocking diode CR101 consequently or connected in parallel to the two ends of the series type excitation winding S101 directly to perform auxiliary excitation on the series type excitation winding either for power generation or the application of motor, the direction of the voltage of the sub-exciter is always connected in parallel in same polarity of the series type excitation magnetic field winding voltage drop, the sub-exciter power supply consists of which including storage power element, generator, solar energy, or the fixed voltage or adjustable voltage DC power supply coming from the rectification of AC power supply;
The system control is that the voltage drop at the two ends of the series type excitation winding S101 would increase while the load current IL increased, the voltage drop is reverse to the sub-exciter power supply -- the bigger the load current, the smaller the current of the sub-exciter, the smaller the load current, the bigger the current of the sub-exciter. Figure 2 is the embodiment of the circuit as shown in Figure 1 to use further an auxiliary storage battery or other storage element as auxiliary power supply, it is constituted chiefly as follows:
A series type excitation motor to be constituted by the connection in series of a series type excitation winding S201 and armature A201 , or it comprises further a compound DC motor to be constituted by magnetic field winding F201 connected in parallel;
Main power supply CPS200 which is the DC power supply to drive the motor and consists of which including storage power element, generator, solar energy, or the fixed voltage or adjustable voltage DC power supply coming from the rectification of AC power supply;
The sub-exciter storage battery B201 to be connected in series to the blocking diode CR201 consequently, and connected in parallel to the two ends of the series type excitation winding S201 to perform sub-exciter on the series type excitation magnetic field winding, the direction of the voltage of the sub-exciter is always connected in parallel in same polarity with the voltage drop of the series type magnetic field winding on either generator or the application of the motor;
Charging current adjusting element set Z201 to be constituted by electromechanical or solid state voltage regulation circuit, or blocking resistor to charge the storage battery while the value of the voltage drop of the series type excitation magnetic field winding S201 exceeded that of the voltage of the auxiliary storage battery B201;
The voltage drop at the two ends of the series type excitation winding S201 would become bigger when the load current IL increased, and the polarity of voltage drop is in reverse direction to that of the sub-exciter power supply, so the bigger the current of the load, the smaller the current of the sub-exciter; the smaller the current of the load, the bigger the current of the sub-exciter.

The functions of the circuit as shown in the above Figure 2 are:
(1) For the motor providing series type excitation winding, sub-exciter control is performed against the series type excitation winding with the auxiliary magnetic field battery to increase the current of the series type excitation winding reduced; otherwise reduce the current of the series type magnetic field while the current of the excitation current of the series type winding increased.
(2) While the current passing the series type excitation winding in compound motor reduced, it will increase the excitation current of the series type winding by means of the auxiliary magnetic field battery; otherwise reduce the excitation current of the series type excitation winding while the current passing the series type excitation winding in the compound motor.

In the above method, while the excitation current of the series type winding increases, the current in the sub-exciter will be reduced; otherwise while the excitation current of the series type winding reduces, the current in the sub-exciter will increase to obtain a magnetic field with constant or approximately permanent intensity in order to raise the efficiency in voltage-doubling low voltage section and under load.

The difference between the present invention and conventional separately excited motor is that the normal operating district provides the feature of separately excited motor, and in the meantime it allows low starting current, larger torque and good overloading torsion to improve the shortcoming of the dropping of efficiency due to insufficient excitation of the magnetic field of the series type excitation motor under low voltage operation and non-full load. The design is applicable to both motor and generator.

To sum up, as the conventional series type excitation motor or compound-wound armature often present insufficient magnetic field overall intensity and low efficiency due to the decreasing of the excitation current under voltage-doubling operation especially low voltage operation, the present voltage-doubling driving offset method and circuit device of the DC series type excitation of compound rectifier motor is an innovative design to improve the above shortcoming, the thinking is creative and new, it is practical, and the function is definite.

## Claims

1. A voltage-doubling driving offset method and circuit device of the DC series type excitation or compound rectifier motor, the features including such as to apply sub-exciter control to DC series type excitation or compound wound dynamo(including generator and motor) especially to increase the intensity of the magnetic field on low voltage or under-load operation without sufficient excitation , and maintain normal excitation on full load in order to maintain saturated excitation or nearly saturated excitation of the full load or light load under various voltages to raise the efficiency in low voltage section, comprising:
(1) To apply sub-exciter control to the series type excitation winding of the motor by means of the auxiliary magnetic field power supply, to increase the current of the series type excitation magnetic field by the auxiliary magnetic field power supply on the reducing of the excitation current of the series type excitation winding, and reduce the current of the series type excitation magnetic field on the increasing of the excitation current of the series type excitation winding;
(2) Increasing the excitation current of the series type excitation winding by the auxiliary magnetic field power supply on the reducing of the current passing the series type excitation winding by the auxiliary magnetic field power supply on the increasing of the current passing the series type excitation winding;
In the above method, the current of the sub-exciter will be reduced while the current of the series type excitation winding increased, otherwise it will be increased in order to attain a magnetic field with constant or approximately permanent intensity to raise the efficiency in voltage-doubling low voltage section and under load,

2. The voltage-doubling driving offset and circuit device of the DC series type excitation or compound rectifier motor as stated in claim 1 to be constituted chiefly as follows:
A series type excitation dynamo to be constituted by a series type excitation S101 and the armature A101 to be connected in parallel, or the compound DC motor comprising further a parallel type excitation magnetic field winding F101;
The main power supply CPS100 as the DC power supply to drive the motor including fixed voltage or adjustable voltage DC power supply coming from storage power element, generator, solar energy, or the rectification of AC power supply;
The sub-exciter power supply CPS101 being connected in series to the blocking diode CR101 consequently or connected in parallel to the two ends of the series type excitation winding directly to perform auxiliary excitation against the series type excitation magnetic field winding either for power generation or the application of motor, to cause the direction of the voltage of the sub-exciter to be always connected in parallel in same polarity with the voltage drop of the series type excitation magnetic field winding, the sub-exciter power supply comprising the fixed voltage or adjustable voltage DC power supply coming from storage power element, generator, solar energy or the rectification of AC power supply;
The voltage drop on the two ends of the series type excitation winding S101 would increase when the load current IL increased, the voltage drop is reverse to the auxiliary exciting power supply; accordingly, the bigger the load current, the smaller the current of the sub-exciter; the smaller the current of the load, the bigger the current of the sub-exciter.

3. The circuit of the voltage-doubling driving offset method and circuit device of the DC series type excitation or compound rectifier motor as stated in claim 1 using further an auxiliary storage battery or other storage element as auxiliary power supply to be constituted chiefly as follows:
The series type excitation dynamo to be constituted by a series type winding S201 and the armature A201 to be connected in parallel, or including further the compound DC motor to be constituted by the parallel type magnetic field winding F201;
The main power supply CPS200 which is the DC power supply to drive the motor comprising storage power element, generator, solar energy, or the fixed or adjustable voltage DC power supply out of the rectification of AC power supply;
The sub-exciter storage battery B201 to be connected in series with the blocking diode CR201 consequently and connected in parallel on the two ends of the series type excitation winding S201 as sub-exciter of the series type excitation magnetic field winding, the direction of the voltage of the sub-exciter is often connected in parallel in same polarity with the series type excitation magnetic field winding;
The charging current adjusting element set Z201 to be constituted by a dynamo or solid state voltage regulation circuit or current limit resistor to charge the storage battery whenever the value of the voltage drop of the series type excitation magnetic field winding S201 exceeded the value of the voltage of the auxiliary storage battery B201;
The voltage drop at the two ends of the series type excitation winding S201 would become bigger when the load current IL increased, and the polarity of voltage drop is in reverse direction to that of the sub-exciter power supply, so the bigger the current of the load, the smaller the current of the sub-exciter; the smaller the current of the load, the bigger the current of the sub-exciter.
The functions of the circuit above are:
(1) For the motor providing series type excitation winding, sub-exciter control is performed against the series type excitation winding with the auxiliary magnetic field battery to increase the current of the series type excitation winding reduced; otherwise reduce the current of the series type magnetic field while the current of the excitation current of the series type winding increased.
(2) While the current passing the series type excitation winding in compound motor reduced, it will increase the excitation current of the series type winding by means of the auxiliary magnetic field battery; otherwise reduce the excitation current of the series type excitation winding while the current passing the series type excitation winding in the compound motor.
In the above method, while the excitation current of the series type winding increases, the current in the sub-exciter will be reduced; otherwise while the excitation current of the series type winding reduces, the current in the sub-exciter will increase to obtain a magnetic field with constant or approximately permanent intensity in order to raise the efficiency in voltage-doubling low voltage section and under load.
